# EUROPÄISCHE PATENTANMELDUNG

(11) **EP 1 800 640 A1**
(43) Veröffentlichungstag der Anmeldung: **27.06.2007**
(21) Anmeldenummer: 06024886.1
(22) Anmeldetag: 01.12.2006
(51) Int. Cl.: A61G 3/06, B60R 3/02

(54) **Ausstellbare Trittstufe eines Fahrzeugs**

(30) Priorität: 22.12.2005 DE 102006062142
(71) Anmelder: Hübner Transportation GbmH, 34123 Kassel (DE)
(72) Erfinder: Ehlers, Niklas, 38690 Vienenburg (DE)
(74) Vertreter: WALTHER, WALTHER & HINZ Patentanwälte - European Patent Attorneys

(57) **Zusammenfassung**

Gegenstand der Erfindung ist eine Ausstellbare Trittstufe eines Fahrzeuges, wobei zwei parallele Schwingen (2,3), die an ihrem einen Ende drehbar an dem Fahrzeug (20) angeordnet sind, wobei die Schwingen (2,3) durch mehrere hintereinander beabstandet zueinander angeordnete Trittglieder (5) verbunden sind, wobei die Trittglieder (5) jeweils drehbar durch die Schwingen (2,3) aufnehmbar sind.

## Beschreibung

Die Erfindung betrifft eine ausstellbare Trittstufe eines Fahrzeuges.

Ausstellbare Trittstufen eines Fahrzeuges sind beispielsweise bei Transportern, Bussen aber auch bei Wohnmobilen hinreichend bekannt.

Bekannte ausstellbare Trittstufen arbeiten nach den unterschiedlichsten Prinzipien. So ist insbesondere eine elektrische Faltstufe bekannt, wobei die Stufe üblicherweise durch einen Hebelmechanismus und einen Elektromotor ein- oder ausgezogen wird. Darüber hinaus ist eine sogenannte Klappstufe bekannt, bei der die Stufe aus dem Inneren des Fahrzeuges im Wege einer Schwenkbewegung um nahezu 180 ° ausgeschwenkt wird. Des Weiteren sind sogenannte Schiebetritte bekannt, bei denen die Trittstufe manuell oder elektromechanisch ein- oder ausziehbar ist.

Alle diese bekannten Stufen, die im Bereich des Rahmens des Fahrzeuges im Wesentlichen unterhalb des Fahrzeuges in einem entsprechend dafür vorgesehenen Gehäuse untergebracht sind, bauen sehr voluminös, und zwar meistens sowohl in horizontaler Richtung als auch in vertikaler Richtung. Insbesondere dann, wenn die ausstellbare Trittstufe sehr hoch baut, muss ein entsprechend hohes Gehäuse unter dem Fahrzeug für die Trittstufe vorgesehen sein. Denn es ist absolut erforderlich, dass die Trittstufe vor Witterungseinflüssen und Schmutz geschützt ist, da ansonsten die Funktionsfähigkeit einer solchen Trittstufe auf Dauer nicht zu gewährleisten ist. Insbesondere bei Gehäusen, die eine gewisse Höhe überschreiten, besteht die Gefahr, dass dann, wenn das Fahrzeug beispielsweise sich in unebenem Gelände befindet, oder aber zu nah am Bordstein entlang fährt, das Gehäuse beschädigt oder sogar abgestoßen wird. Selbst wenn das Gehäuse samt der darin befindlichen ausstellbaren Trittstufe noch vorhanden ist, ist die Funktionsfähigkeit der Trittstufe häufig allerdings nicht mehr gegeben.

Der Erfindung liegt daher die Aufgabe zugrunde, eine ausstellbare Trittstufe bereitzustellen, die überaus platzsparend ausgebildet ist. Insbesondere soll die Trittstufe im eingeklappten Zustand über eine nur geringe Höhe verfügen und darüber hinaus das Gehäuse zur Aufnahme des Fahrzeuges eine gewisse Tiefe nicht überschreiten.

Zur Lösung der Aufgabe wird erfindungsgemäß vorgeschlagen, dass die ausstellbare Trittstufe zwei parallele Schwingen aufweist, die an ihrem einen Ende drehbar an dem Fahrzeug angeordnet sind, wobei die Schwingen durch mehrere hintereinander und beabstandet zueinander angeordnete Trittglieder verbunden sind, wobei die Trittglieder jeweils drehbar durch die Schwingen aufnehmbar sind. Erkennbar ist eine derart ausgebildete Trittstufe nach Art einer zwangläufig geschlossenen kinematischen Kette ausgebildet. Eine derart ausgebildete Trittstufe hat den Vorteil, dass sie bei Verschwenken zur Seite, in welcher Stellung die einzelnen Trittglieder unmittelbar aneinander anliegen, eine geringe Tiefe aufweist, wohingegen die Länge allerdings zunimmt. Das heißt, dass mit einer solchen Trittstufe das Gehäuse unter dem Fahrzeug sehr flach gehalten werden kann und auch das Gehäuse nur eine geringe Tiefe besitzen muss, wohingegen die Länge leicht zunimmt, wobei allerdings die Länge des Gehäuses zur Aufnahme der eingezogenen Trittstufe in technischer Hinsicht keinen gravierenden Beschränkungen unterliegt.

Vorteilhafte Merkmale und weitere Ausführungsformen sind den Unteransprüchen zu entnehmen.

So ist insbesondere nach einer ersten Variante vorgesehen, dass die Trittglieder im Querschnitt rechteckförmig ausgebildet sind, wobei die Trittglieder vertikal ausgerichtet durch die Schwingen aufnehmbar sind. Insbesondere durch die rechteckförmige Ausgestaltung der Trittglieder in Verbindung mit der vertikalen Ausrichtung der Trittglieder wird ein hohes Widerstandsmoment gegen Durchbiegung bereitgestellt. Durch entsprechende Wahl der Dicke der Trittglieder kann darüber hinaus sichergestellt sein, dass die horizontale Verbiegung der Trittglieder bei horizontaler Belastung im tolerierbaren Bereich verbleibt. Das heißt, dass eine solche Trittstufe von oben gesehen das Aussehen eines Rostes aufweist.

Des Weiteren ist nach einem besonderen Merkmal der Erfindung vorgesehen, dass die Trittglieder endseitig jeweils eine Öse aufweisen, wobei die Anordnung des Trittgliedes an den Ösen derart ist, dass das Trittglied an der einen Seite der einen Öse und an der anderen Seite der anderen Öse befestigt ist. Das heißt, dass die Trittglieder diagonal zu den Ösen verlaufen, was weiterhin bedeutet, dass die Trittglieder in einem Winkel von etwas weniger als 90 ° im ausgestellten Zustand der Trittstufe zu den Schwingen verlaufen. Der Vorteil dieser Ausgestaltung einer Trittstufe besteht darin, dass im eingeklappten Zustand der Trittstufe die einzelnen Trittglieder unmittelbar aneinander anliegen können. Wären hingegen die Trittglieder zentrisch zur Schwenkachse an den Ösen angeordnet, so würde sich zwischen den einzelnen Trittglieder im zusammengezogenen Zustand der Trittstufe zwischen den einzelnen Trittgliedern immer ein Abstand von der Hälfte des Durchmessers einer Öse ergeben. Mithin würde eine solche Trittstufe eine größere Tiefe aufweisen als eine, bei der die Anbindung der Trittglieder an den Ösen diagonal ausgerichtet ist.

Bei einer zweiten Variante ist erfindungsgemäß vorgesehen, dass die Trittglieder im Querschnitt rechteckförmig ausgebildet sind, wobei die Trittglieder horizontal ausgerichtet durch die Schwingen aufnehmbar sind. Eine solche Trittstufe hat den Vorteil, dass die Trittstufe bei horizontaler Belastung, also einer Belastung in Richtung der Ebene der Trittstufe, relativ gesehen stabil ist, hingegen die einzelnen Trittglieder aufgrund der Anordnung in den Schwingen und ihrer Geometrie in Bezug auf ihren Querschnitt eine etwas höhere Durchbiegung aufweisen. Darüber hinaus baut eine derartige Trittstufe im eingezogenen Zustand tiefer, d. h. breiter als die erste Variante einer Trittstufe.

Insbesondere um eine übermäßige Durchbiegung zu verhindern, ist insofern nach einem weiteren Merkmal dieser zweiten Variante vorgesehen, dass unter den Trittgliedern Stützglieder vorgesehen sind, wobei die Stützglieder im Abstand zwischen zwei Trittgliedern ebenfalls drehbar durch die Schwingen aufnehmbar sind, wobei sich jeweils zwei Trittglieder auf einem Stützglied abstützen.

Beiden Varianten ist gemein, dass die Schwingen in ihrer jeweiligen Endstellung arretierbar sind, was beispielsweise im ausgeklappten Zustand der Trittstufe durch eine federbelastete Kugel erfolgen kann, die in eine entsprechende Ausnehmung in den Schwingen einläuft.

Des Weiteren hat sich als vorteilhaft herausgestellt, wenn die Schwingen im Querschnitt U-förmig ausgebildet sind, wobei die Drehachsen zur Aufnahme der Trittglieder bzw. auch der Stützglieder im Bereich der Schenkel der U-förmig ausgebildeten Schwingen angeordnet sind, da eine solche im Querschnitt U-förmige Ausgestaltung der Schwingen ein hohes Widerstandsmoment gegen Durchbiegung bereitstellt.

Nach einem weiteren vorteilhaften Merkmal der Erfindung ist vorgesehen, dass zum Verschwenken der Schwingen ein Antrieb, und hier insbesondere ein Spindelantrieb vorgesehen ist. Hierbei ist es ausreichend, wenn der Spindelantrieb an einer der beiden Schwingen angreift, da, wie bereits zu eingangs erläutert, die Trittstufe nach Art einer zwangläufig geschlossenen Getriebekette ausgebildet ist und insofern bei Bewegung einer Schwinge die Bewegung auf die andere Schwinge übertragen wird.

Um die Trittstufe bzw. auch deren Antrieb vor Verschmutzung zu schützen, ist unterhalb des Fahrzeuges bzw. im Bereich des Fahrzeugbodens ein entsprechendes Gehäuse zur Aufnahme der eingeklappten Trittstufe vorgesehen.

Anhand der Zeichnungen wird die Erfindung nachstehend beispielhaft näher erläutert.
- Fig. 1: zeigt die Trittstufe nach der ersten Variante im ausgeschwenkten Zustand in perspektivischer Darstellung;
- Fig. 2: zeigt einen Ausschnitt aus Fig. 1 in vergrößerter Darstellung;
- Fig. 3: zeigt die Trittstufe gemäß Fig. 1 im eingeschwenkten Zustand;
- Fig. 4: zeigt in einer perspektivischen Darstellung den Aufbau einer Trittstufe gemäß der zweiten Variante;
- Fig. 5: zeigt eine solche Trittstufe gemäß Fig. 3 in einer Seitenansicht im Schnitt;
- Fig. 6: zeigt die Stufe gemäß der zweiten Variante in eingezogenem Zustand
- Fig. 7: zeigt die Anbindung einer Schwinge an dem Boden des Fahrzeugs;
- Fig. 8: zeigt den Ausschnitt mit der Anbindung des Spindelantriebes gemäß Fig. 1;
- Fig. 9: zeigt einen Schnitt gemäß der Linie VIII - VIII aus Fig. 7.

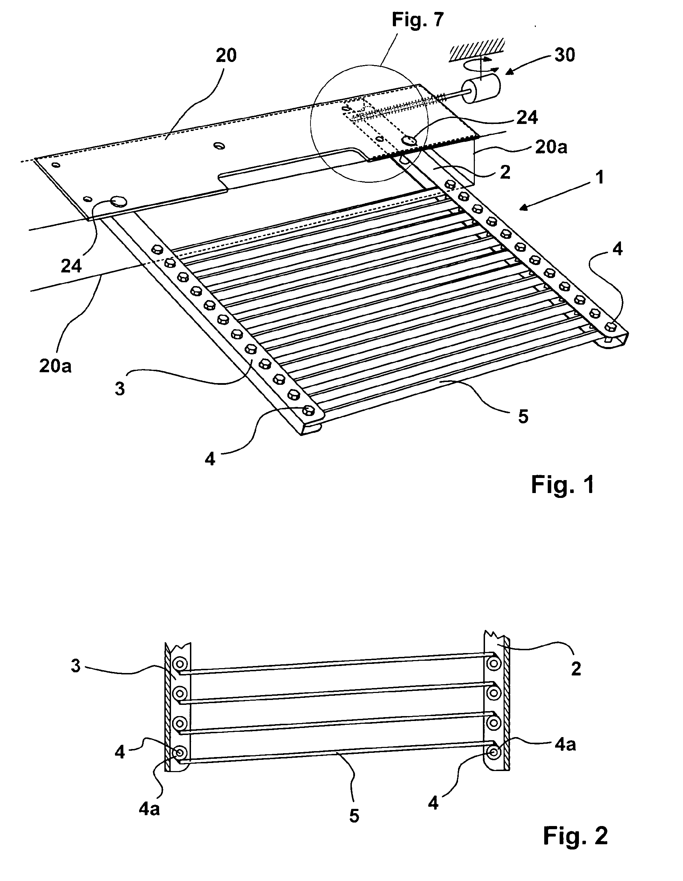

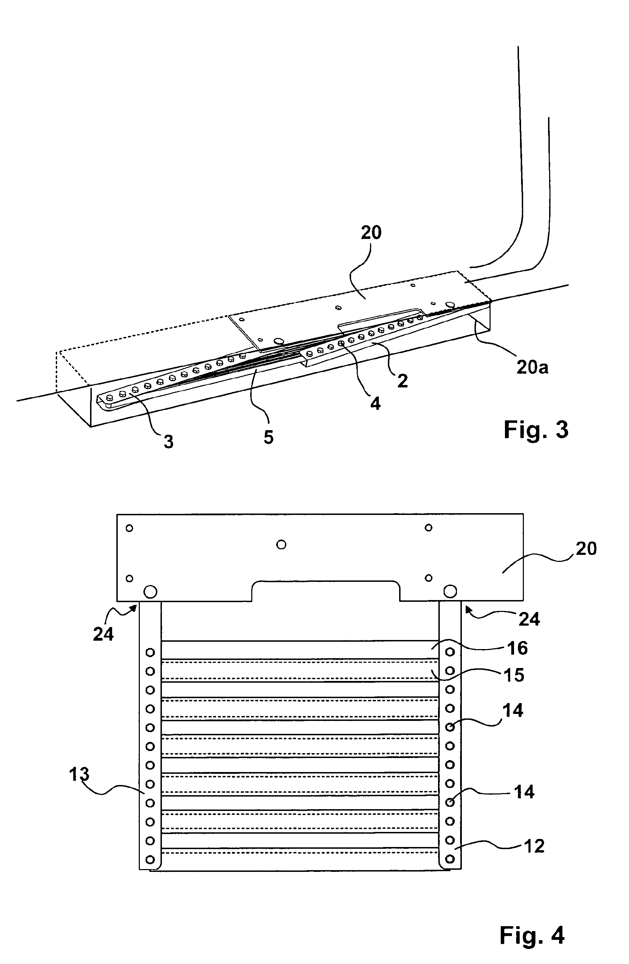

Bei der Ausbildung der ausschwingbaren Trittstufe gemäß den Figuren 1 und 2 zeigt die insgesamt mit 1 bezeichnete Trittstufe zwei Schwingen 2, 3, wobei die im Querschnitt U-förmig ausgebildeten Schwingen 2, 3 jeweils eine Vielzahl von hintereinander angeordneten Bolzen 4 aufweisen, wobei die mit 5 bezeichneten Trittglieder endseitig jeweils eine Öse 4a besitzen, die von den mit 4 bezeichneten Bolzen aufgenommen ist, wie sich dies aus der ausschnittsweisen Vergrößerung aus Fig. 2 ergibt. Hierbei ist erkennbar, dass die Trittglieder 5 diagonal zu den ihnen zugeordneten Bolzen 4 in den beiden Schwingen 2 und 3 verlaufen. Das heißt, die Anordnung des Trittgliedes an den Ösen 4a ist derart, dass das Trittglied an der einen Seite der einen Öse und an der anderen Seite der anderen Öse der jeweiligen Schwinge 2, 3 befestigt ist. Hierdurch wird erreicht, dass im zusammengeklappten Zustand gemäß Fig. 3 die einzelnen Trittglieder 5 unmittelbar aneinander anliegen. Das heißt, dass diese Art der Befestigung der Trittglieder an den Ösen zu einer platzsparenden Bauweise der Trittstufe in eingeklapptem Zustand führt.

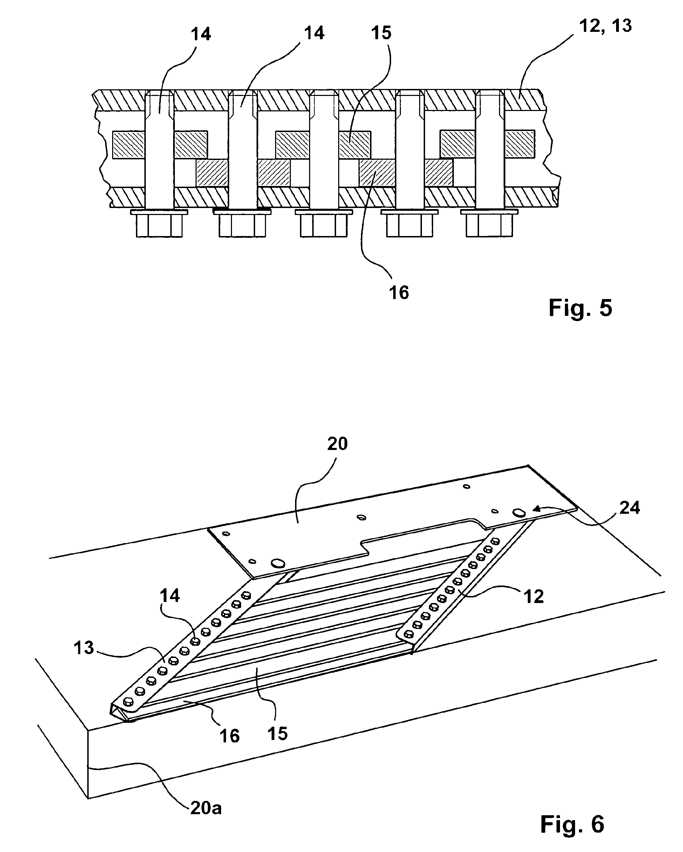

In Bezug auf die zweite Variante wird nunmehr auf die Figuren 4 und 5 verwiesen. Gemäß Fig. 4 sind wiederum zwei Schwingen 12, 13 vorgesehen, die der Aufnahme von Bolzen 14 dienen. Auch hier sind die Schwingen im Querschnitt U-profilförmig ausgebildet. Die Bolzen werden hierbei durch die Schenkel der Schwingen gehalten, wie sich dies aus der Figur 4, aber auch aus der Figur 5 ergibt. Bei der Ausbildung der Trittstufe gemäß dieser zweiten Variante sind in den Trittgliedern wechselweise Stützglieder 16 vorgesehen, wobei sich die Trittglieder 15 auf den Stützgliedern 16 abstützen, wie sich dies unmittelbar in Anschauung der Fig. 5 ergibt.

Fig. 6 zeigt die Trittstufe gemäß Fig. 4 in eingezogenem Zustand; hierbei ist erkennbar, dass aufgrund der Konstruktion die Tiefe der eingezogenen Stufe größer ist als bei der ersten Variante. Allerdings ist diese Stufe in sich stabiler.

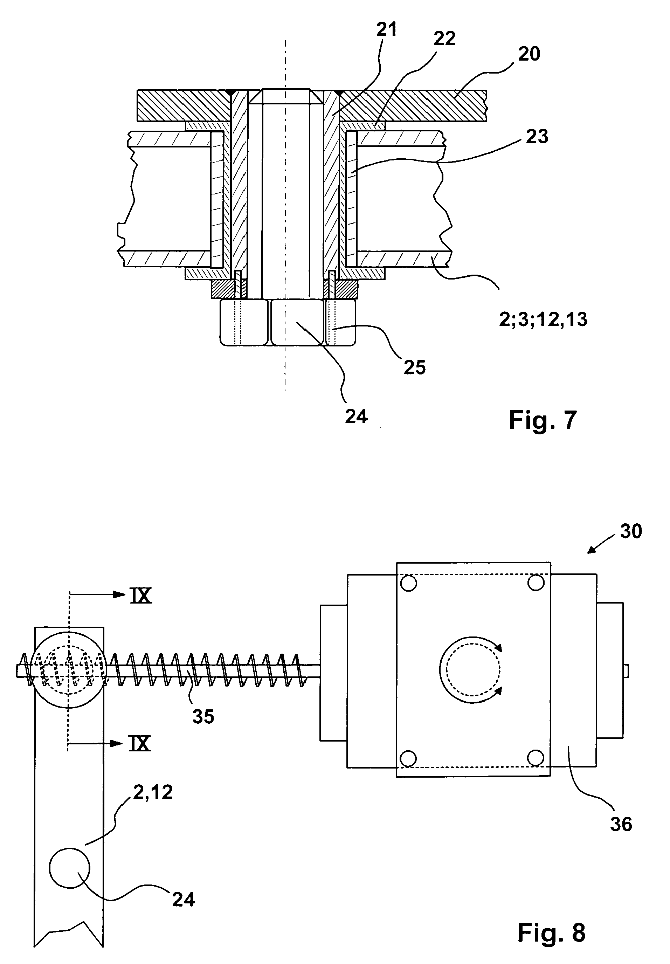

Aus Fig. 7 ist erkennbar, wie die Schwingen einer jeden Variante am Boden des Fahrzeuges befestigt sind. Die mit 20 bezeichnete Platte, die mit dem Boden des Fahrzeuges verbunden wird, weist eine Gewindehülse 21 auf, die mit dem Boden des Fahrzeuges verschweißt ist. Um die Gewindehülse 21 herum befindet sich eine im Querschnitt doppel T-förmige Kunststoffhülse 22, wobei zwischen den Schenkeln der doppel T-förmigen Hülse 22 die insgesamt mit 2, 3 bzw. 12, 13 bezeichnete Schwinge lagert. Um bei Aufbringen eines Momentes auf die Schwinge, was dann der Fall ist, wenn z. B. eine Person auf der Trittstufe aufsteht, ein Einschneiden der im Querschnitt U-profilförmigen Schwinge in die Kunststoffhülse 22 zu vermeiden, ist die U-profilförmige Schwinge im Bereich der Kunststoffhülse 22 durch eine Hülse 23 geschlossen. Der mit 24 bezeichnete Bolzen ist nunmehr in die Hülse 21 eingedreht und in geeigneter Weise, z. B. durch Stifte 25, gegen Verdrehen gesichert.

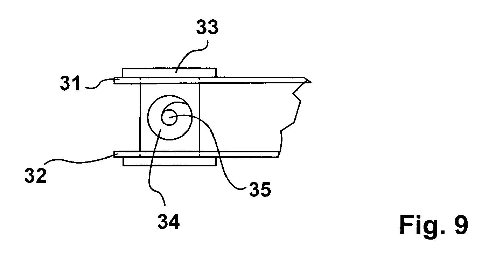

Für den elektromechanischen Antrieb zum Ein- und Ausschwenken der Trittstufe ist ein Spindelantrieb 30 vorgesehen, wie sich dies beispielhaft aus Fig. 1 in Verbindung mit Fig. 8 und Fig. 9 ergibt. Hierbei sind in den Schenkeln der Schwinge 2, 12 zwei übereinander angeordnete Augen oder Bohrungen 31 und 32 vorgesehen (Fig. 8), durch die ein Bolzen 33 schwenkbar aufnehmbar ist, wobei der Bolzen 33 in der Mitte eine Gewindebohrung 34 für die Spindel 35 aufweist. Der Spindelantrieb selbst zeigt die Nummer 36. Der Spindelantrieb 36 ist verschwenkbar ebenfalls an der Platte 20 für den Boden des Fahrzeuges gelagert, da er sich beim Ein- oder Ausziehen der Spindel verschwenkt.

Die Trittstufe ist, gegebenenfalls samt Antrieb, in einem Gehäuse 20a unter dem Fahrzeugboden 20 angeordnet, um die Stufe vor Verschmutzung und Witterungseinflüssen zu schützen.

## Patentansprüche

1. Ausstellbare Trittstufe eines Fahrzeuges
**gekennzeichnet durch**,
zwei parallele Schwingen (2, 3; 12, 23), die an ihrem einen Ende drehbar an dem Fahrzeug (20) angeordnet sind, wobei die Schwingen (2, 3; 12, 13) **durch** mehrere hintereinander beabstandet zueinander angeordnete Trittglieder (5, 15) verbunden sind, wobei die Trittglieder (5, 15) jeweils drehbar **durch** die Schwingen (2, 3; 12, 13) aufnehmbar sind.

2. Ausstellbare Trittstufe nach Anspruch 1,
**dadurch gekennzeichnet,**
**dass** die Trittglieder (5) im Querschnitt rechteckförmig ausgebildet sind, wobei die Trittglieder (5) vertikal ausgerichtet durch die Schwingen (2, 3) aufnehmbar sind.

3. Ausstellbare Trittstufe nach einem der vorangehenden Ansprüche,
**dadurch gekennzeichnet,**
**dass** die Trittglieder (5) endseitig jeweils eine Öse (4a) aufweisen, wobei die Anordnung des Trittgliedes (5) an den Ösen (4a) derart ist, dass das Trittglied (5) an der einen Seite der einen Öse (4a) und an der anderen Seite der anderen Öse (4a) befestigt ist.

4. Ausstellbare Trittstufe nach einem der vorangehenden Ansprüche,
**dadurch gekennzeichnet,**
**dass** die Trittglieder (15) im Querschnitt rechteckförmig ausgebildet sind, wobei die Trittglieder (12, 13) horizontal ausgerichtet durch die Schwingen (2, 3; 12, 13) aufnehmbar sind.

5. Ausstellbare Trittstufe nach Anspruch 4
**dadurch gekennzeichnet,**
**dass** unter den Trittglieder (15) Stützglieder (16) vorgesehen sind, wobei die Stützglieder (16) im Abstand zwischen zwei Trittgliedern (15) ebenfalls drehbar durch die Schwingen (12, 13) aufnehmbar sind, wobei sich zwei Trittglieder (15) auf einem Stützglied (16) abstützen.

6. Ausstellbare Trittstufe nach einem der vorangehenden Ansprüche,
**dadurch gekennzeichnet,**
**dass** die Schwingen (2, 3; 12, 13) in ihrer jeweiligen Endstellung arretierbar sind.

7. Ausstellbare Trittstufe nach einem der vorangehenden Ansprüche,
**dadurch gekennzeichnet,**
**dass** die Schwingen (2, 3; 12, 13) im Querschnitt U-förmig ausgebildet sind.

8. Ausstellbare Trittstufe nach einem der vorangehenden Ansprüche,
**dadurch gekennzeichnet,**
**dass** zum Verschwenken der Schwingen (2, 3; 12, 13) ein Antrieb (30) vorgesehen ist.

9. Ausstellbare Trittstufe nach Anspruch 8,
**dadurch gekennzeichnet,**
**dass** der Antrieb (30) als Spindelantrieb ausgebildet ist.

10. Ausstellbare Trittstufe nach einem der vorangehenden Ansprüche,
**dadurch gekennzeichnet,**
**dass** die Trittstufe in einem Gehäuse (20a) des Fahrzeuges angeordnet ist, wobei das Gehäuse (20a) bei eingeklappter Trittstufe verschließbar ist.

## Geänderte Patentansprüche

### Geänderte Patentansprüche gemäss Regel 86(2) EPÜ.

**1.** Ausstellbare Trittstufe für ein Fahrzeug
**gekennzeichnet durch**,
zwei parallele Schwingen (2, 3; 12, 23), die an ihrem einen Ende drehbar an dem Fahrzeug (20) angeordnet sind, wobei die Schwingen (2, 3; 12, 13) **durch** mehrere hintereinander beabstandet zueinander angeordnete Trittglieder (5, 15) verbunden sind, wobei die Trittglieder (5, 15) jeweils drehbar **durch** die Schwingen (2, 3; 12, 13) aufnehmbar sind.

**2.** Ausstellbare Trittstufe nach Anspruch 1,
**dadurch gekennzeichnet,**
**dass** die Trittglieder (5) im Querschnitt rechteckförmig ausgebildet sind, wobei die Trittglieder (5) vertikal ausgerichtet durch die Schwingen (2, 3) aufnehmbar sind.

**3.** Ausstellbare Trittstufe nach einem der vorangehenden Ansprüche,
**dadurch gekennzeichnet,**
**dass** die Trittglieder (5) endseitig jeweils eine Öse (4a) aufweisen, wobei die Anordnung des Trittgliedes (5) an den Ösen (4a) derart ist, dass das Trittglied (5) an der einen Seite der einen Öse (4a) und
diagonal verlaufend an der anderen Seite der anderen Öse (4a) befestigt ist.

**4.** Ausstellbare Trittstufe nach einem der vorangehenden Ansprüche,
**dadurch gekennzeichnet,**
**dass** die Trittglieder (15) im Querschnitt rechteckförmig ausgebildet sind, wobei die Trittglieder (15) horizontal ausgerichtet durch die Schwingen (2, 3; 12, 13) aufnehmbar sind.

**5.** Ausstellbare Trittstufe nach Anspruch 2 und 4,
**dadurch gekennzeichnet,**
**dass** unter den Trittglieder (15) Stützglieder (16) vorgesehen sind, wobei die Stützglieder (16) im Abstand zwischen zwei Trittgliedern (15) ebenfalls drehbar durch die Schwingen (12, 13) aufnehmbar sind, wobei sich zwei Trittglieder (15) auf einem Stützglied (16) abstützen.

**6.** Ausstellbare Trittstufe nach einem der vorangehenden Ansprüche,
**dadurch gekennzeichnet,**
**dass** die Schwingen (2, 3; 12, 13) in ihrer jeweiligen Endstellung arretierbar sind.

**7.** Ausstellbare Trittstufe nach einem der voranstehenden Ansprüche,
**dadurch gekennzeichnet,**
**dass** die Schwingen (2, 3; 12, 13) im Querschnitt U-förmig ausgebildet sind.

**8.** Ausstellbare Trittstufe nach einem der vorangehenden Ansprüche,
**dadurch gekennzeichnet,**
**dass** zum Verschwenken der Schwingen (2, 3; 12, 13) ein Antrieb (30) vorgesehen ist.

**9.** Ausstellbare Trittstufe nach Anspruch 8,
**dadurch gekennzeichnet,**
**dass** der Antrieb (30) als Spindelantrieb ausgebildet ist.
